# EUROPEAN PATENT SPECIFICATION

(11) **EP 4 350 547 B1**
(45) Date of publication and mention of the grant of the patent: **03.06.2026**
(21) Application number: 22811116.7
(22) Date of filing: 26.04.2022
(51) Int. Cl.: G06F 21/55, G06F 21/57, H04L 9/40, G05B 23/02, G05B 19/042

(54) **ANOMALY DETECTION SYSTEM, ANOMALY DETECTION METHOD, AND PROGRAM**
ANOMALIEDETEKTIONSSYSTEM, ANOMALIEDETEKTIONSVERFAHREN UND PROGRAMM
SYSTÈME DE DÉTECTION D'ANOMALIE, PROCÉDÉ DE DÉTECTION D'ANOMALIE ET PROGRAMME

(30) Priority: 26.05.2021 JP 2021088346
(43) Date of publication of application: 10.04.2024
(73) Proprietor: Panasonic Intellectual Property Corporation of America, Torrance, CA 90504 (US)
(72) Inventor: HIRAISHI, Rikiya, Kadoma-shi, Osaka 571-0057 (JP); HIRAMOTO, Takuji, Kadoma-shi, Osaka, 571-0057 (JP); OBA, Tatsumi, Kadoma-shi, Osaka, 571-0057 (JP)
(74) Representative: Grünecker Patent- und Rechtsanwälte PartG mbB
(86) International application number: PCT/JP2022/018977
(87) International publication number: WO 2022/249842

(56) References cited:
- WO-A1-2020/189211
- JP-A- 2014 123 996
- US-A1- 2016 330 225
- US-A1- 2018 275 642
- US-A1- 2022 147 032
- EREZ NOAM, WOOL AVISHAI: "Control variable classification, modeling and anomaly detection in Modbus/TCP SCADA systems", INTERNATIONAL JOURNAL ON CRITICAL INFRASTRUCTURE PROTECTION, vol. 10, 1 September 2015 (2015-09-01), AMSTERDAM, NL , pages 59 - 70, XP093007491, ISSN: 1874-5482, DOI: 10.1016/j.ijcip.2015.05.001

## Description

### [Technical Field]

The present disclosure relates to an anomaly detection device, anomaly detection method, and a program that detect a future anomalous state of a control system.

### [Background Art]

In recent years, cyberattacks against control systems of factories, buildings, and electricity systems have become highly sophisticated. In addition to conventional boundary protective measures, security measures premised on future intrusion attacks are awaited. In response to this, the introduction of a control system that internally detects an intrusion by an attacker against a network of the control system has been started.

A control system often operates based on predetermined communication pairings or communication protocols. Thus, it is relatively easy to define, as a whitelist, a combination of these communication pairings or communication protocols. For example, Patent Literature (PTL) 1 discloses a system that detects an intrusion and an attack using a whitelist.

Patent Literature (PTL) 1 discloses an intrusion detection system, focusing on that the communication pairing or communication protocol of a control system is different depending on a system state (such as "operating", "halting", or "under inspection"). For each system state of the control system, a whitelist is previously defined. Then, the intrusion detection system selects a whitelist suitable for the control state of the control system and thereby detects an intrusion or an attack.
PTL 2 describes an anomaly detection system which detects an anomaly of a facility from collected operational data. Processing by the system is divided into a learning phase and a monitoring phase. In the learning phase, the system learns a predictive model based on operational data obtained by monitoring under normal operation. In the monitoring phase, the system calculates an anomaly score based on a deviation of operational data observed during monitoring from a prediction result obtained by the predictive model, informs the user and displays related information.
PTL 3 describes a monitoring device for monitoring a monitoring subject such as a plant on the basis of measurement values from the subject. From the measured values, a degree of anomaly is calculated using a correlation model. The correlation model is generated by machine learning.
PTL 4 describes systems and methods for detecting anomalies in an industrial control system. An anomaly detection system is trained using training data including a correct operational parameter or a correlation of at least two operational parameters. During operation, operational parameters are checked to detect a deviation from the training data. In case of a detected deviation below or above a defined threshold, anomaly is determined and an alarm issued.

### [Citation List]

### [Patent Literature]

[PTL 1] Japanese Patent No. 6509462
[PTL 2] US patent application publication 2018/275642 A1
[PTL 3] International patent application publication WO 2020/189211 A1
[PTL 4] US patent application publication 2016/330225 A1

### [Summary of Invention]

### [Technical Problem]

The intrusion detection system disclosed in PTL 1 can apply the whitelist to the control system that has clear transition boundaries between the system states, as with a factory production line. For example, the control system having the clear transition boundaries between the system states refers to a control system having transition boundaries clearly definable between system states including "operating", "halting", and "under inspection". However, a control system that, like a social infrastructure, continuously operates 24 hours a day, 365 days a year has unclear transition boundaries between system states. These system states may include a system state that is difficult to define or is unexpected. In this case, the whitelist is less applicable, and thus appropriate anomaly detection cannot be performed.

If the whitelist is defined for each IP-address communication pair or for each communication protocol, appropriate anomaly detection cannot be performed in the event of a spoofing attack that attempts to change a control value using an authorized protocol defined in the whitelist.

The present disclosure provides an anomaly detection system and so forth that are capable of appropriate anomaly detection.

### [Solution to Problem]

In accordance with an aspect of the present disclosure, an anomaly detection system that detects a future anomalous state of a control system includes: a register value collector that collects register values of a plurality of register numbers from a controller that controls the control system; a future state predictor that predicts a future state of the control system; a blacklist creator that creates a blacklist based on a result of the predicting performed by the future state predictor; a blacklist manager that stores the blacklist created; an anomaly determiner that determines whether the control system enters an anomalous state, by checking the register values collected by the register value collector against the blacklist stored in the blacklist manager; and an outputter that outputs a result of the determining performed by the anomaly determiner. The blacklist creator defines, as the blacklist: a predicted register number and a range of the register value of the predicted register number; the predicted register number being a register number that is predicted, if a register value of the predicted register number is changed, to cause the control system to enter the anomalous state in future, among the register numbers holding the register values collected by the register value collector, the range being a range within which the control system is predicted to enter the anomalous state, and dynamically creates the blacklist corresponding to a combination of the register values of the plurality of register numbers collected by the register value collector.

### [Advantageous Effects of Invention]

According to the aspect described above, appropriate anomaly detection can be performed.

### [Brief Description of Drawings]

[FIG. 1]

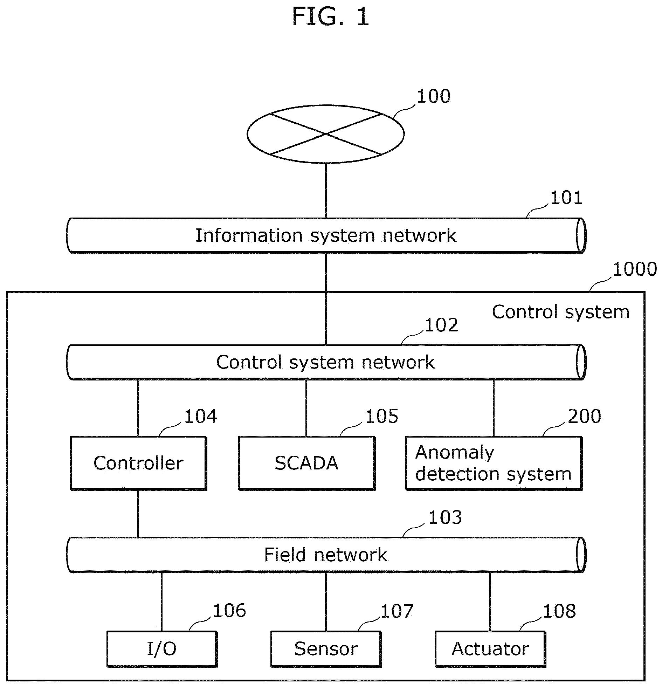

   FIG. 1 is a diagram illustrating an example of a configuration of a control system according to the present embodiment.
[FIG. 2]

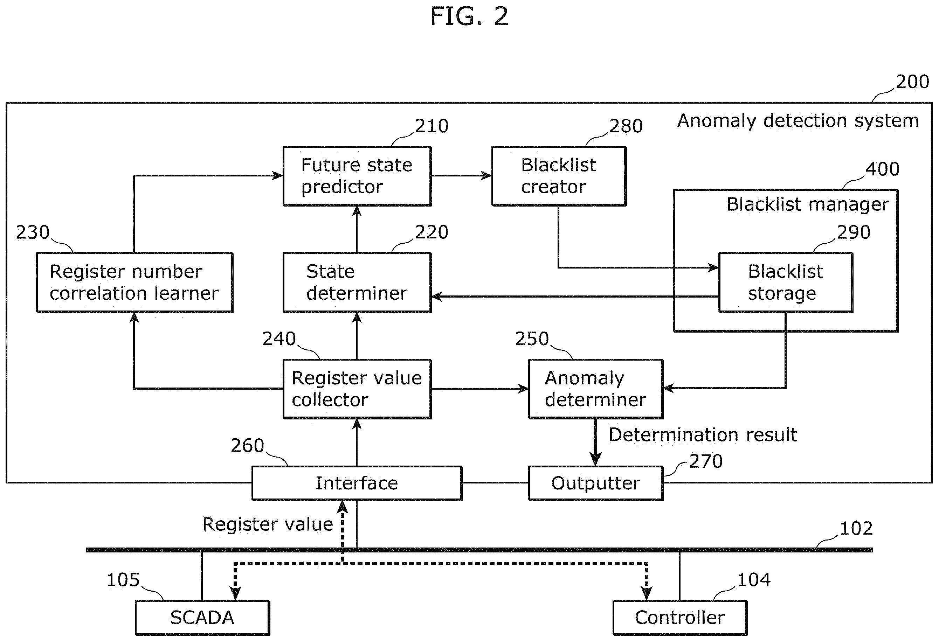

   FIG. 2 is a diagram illustrating an example of a configuration of an anomaly detection system according to the present embodiment.
[FIG. 3]

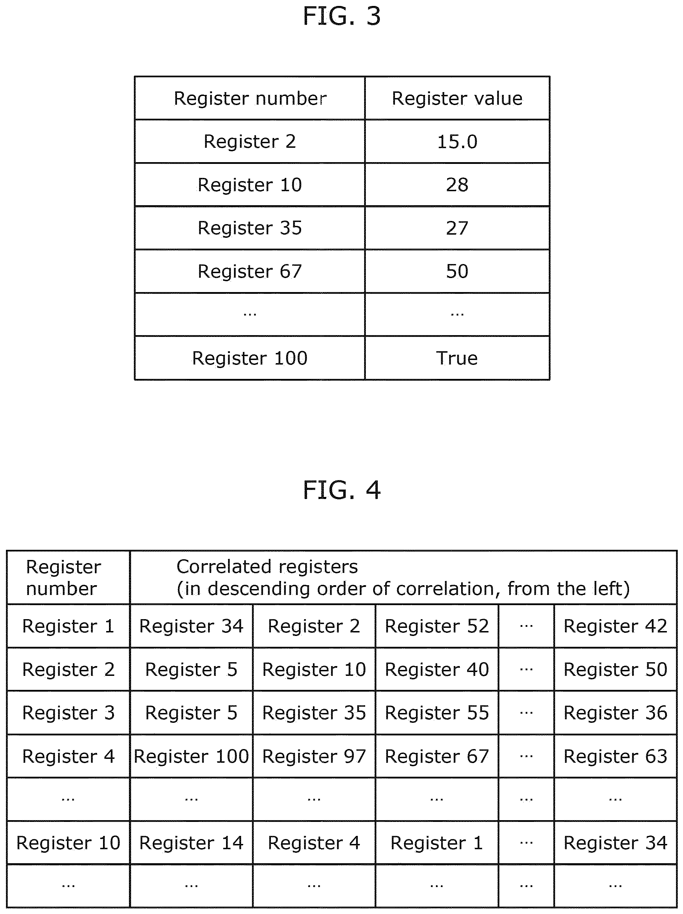

   FIG. 3 is a diagram illustrating an example of a register held by a controller according to the present embodiment.
[FIG. 4]
   FIG. 4 is a diagram illustrating an example of a result of learning by a register number correlation learner according to the present embodiment.
[FIG. 5]

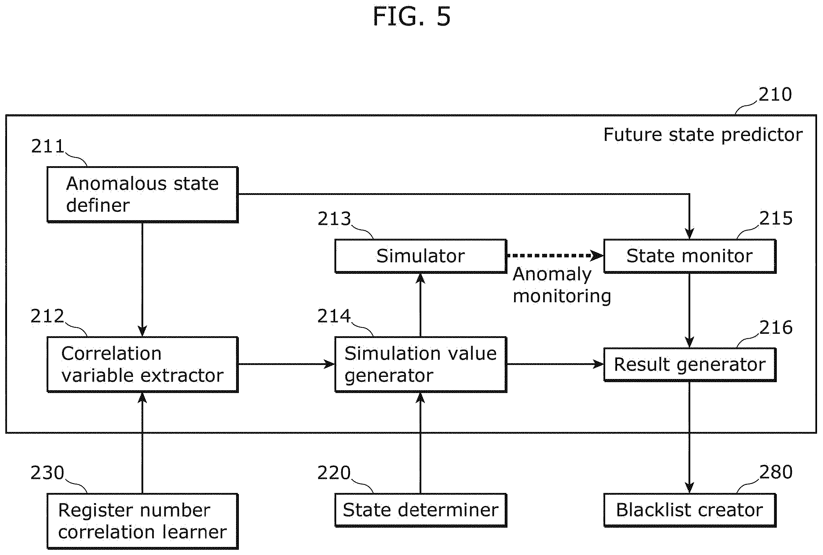

   FIG. 5 is a diagram illustrating an example of a configuration of a future state predictor according to the present embodiment.
[FIG. 6]

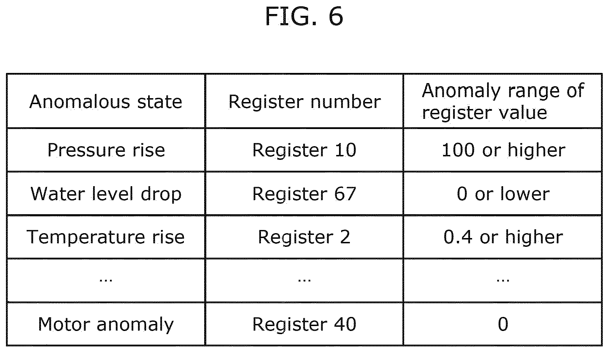

   FIG. 6 is a diagram illustrating an example of definitions provided by an anomalous state definer according to the present embodiment.
[FIG. 7]

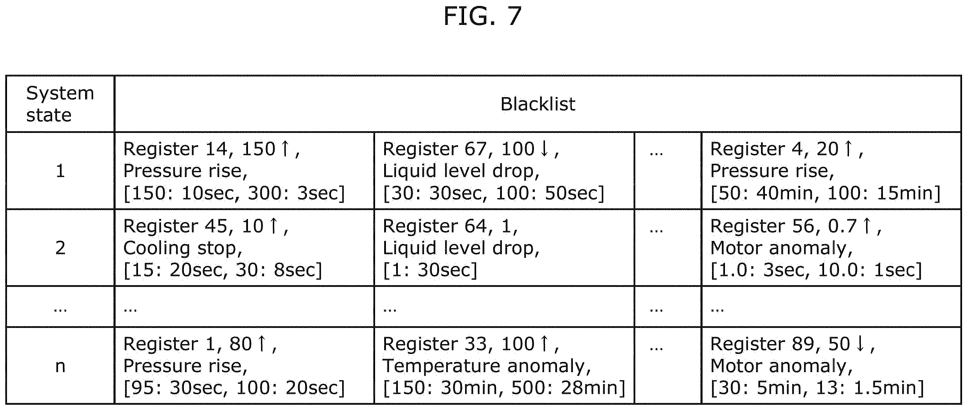

   FIG. 7 is a diagram illustrating an example of descriptions in a blacklist stored in a blacklist storage according to the present embodiment.
[FIG. 8]

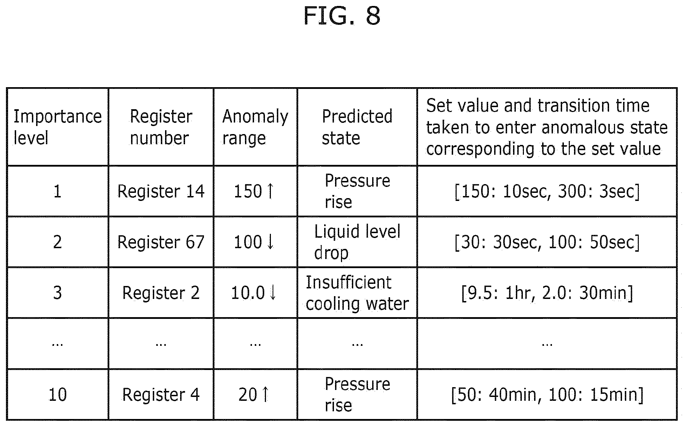

   FIG. 8 is a diagram illustrating an example of details of the blacklist.
[FIG. 9]

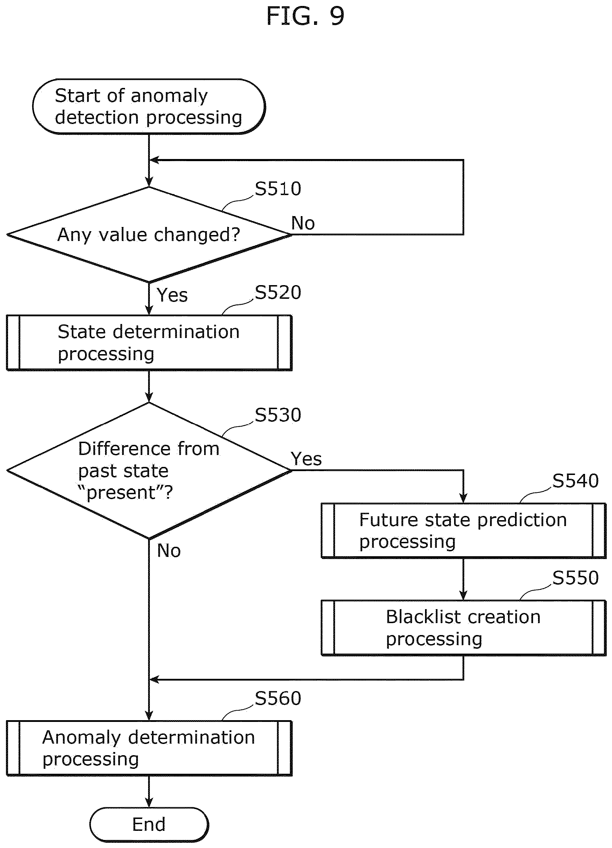

   FIG. 9 is a diagram illustrating an example of a flowchart of anomaly detection processing performed by the anomaly detection system according to the present embodiment.
[FIG. 10]

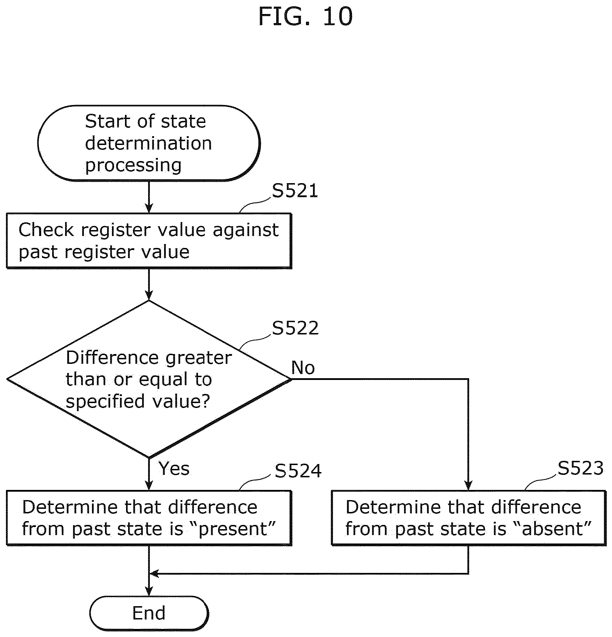

   FIG. 10 is a diagram illustrating an example of a flowchart of state determination processing according to the present embodiment.
[FIG. 11]

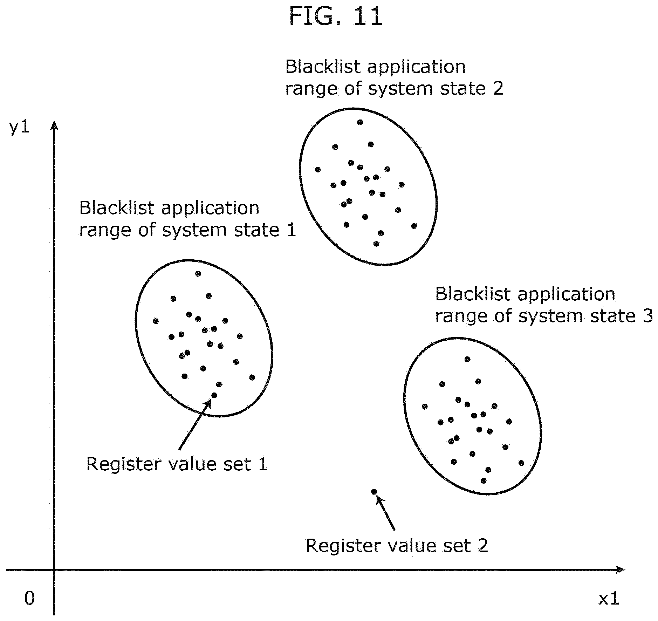

   FIG. 11 is a diagram illustrating an example of a cluster configuration of a register value set.
[FIG. 12]

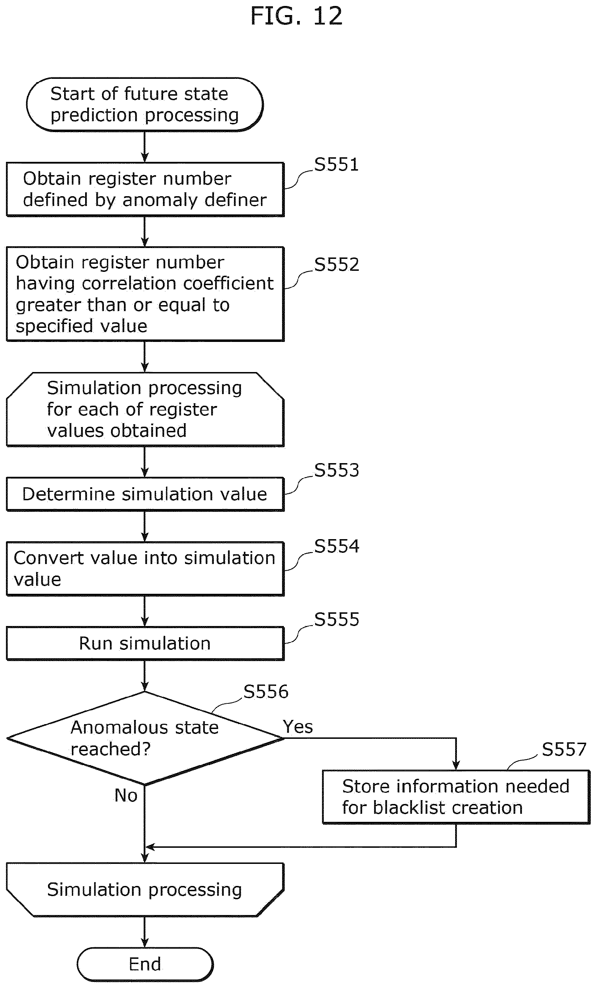

   FIG. 12 is a diagram illustrating an example of a flowchart of future state prediction processing according to the present embodiment.
[FIG. 13]

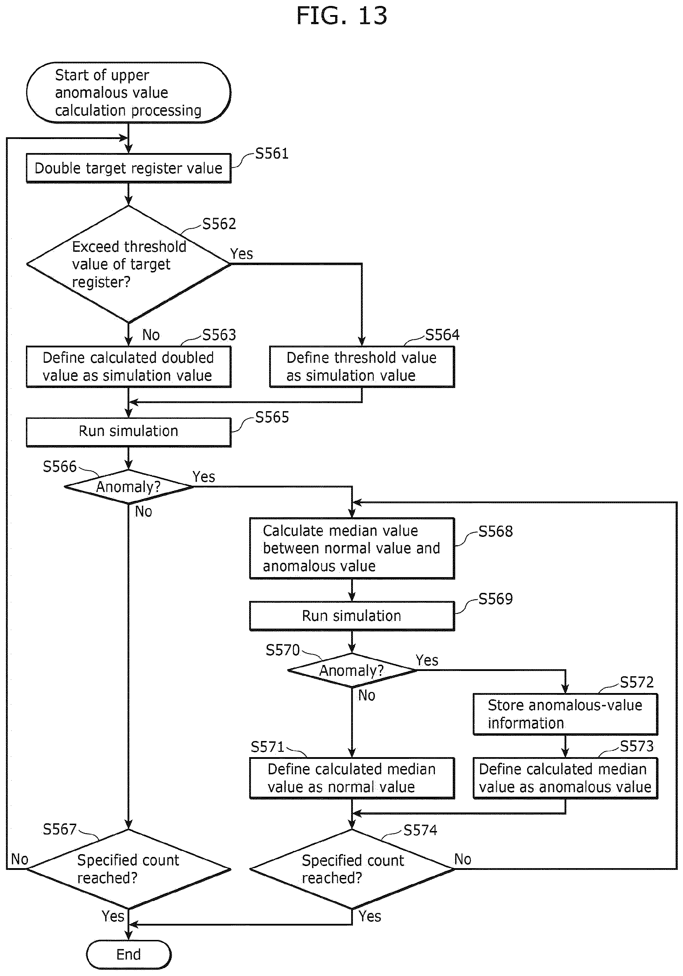

   FIG. 13 is a diagram illustrating an example of a flowchart of simulation value determination algorithm processing (upper anomalous value calculation) according to the present embodiment.
[FIG. 14]

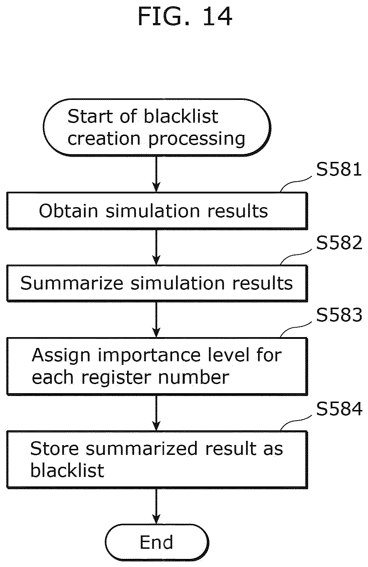

   FIG. 14 is a diagram illustrating an example of a flowchart of blacklist creation processing according to the present embodiment.
[FIG. 15]

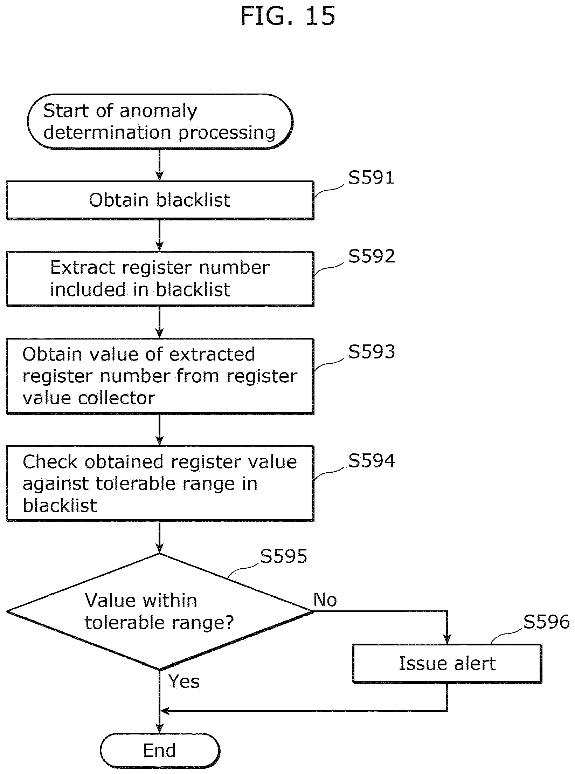

   FIG. 15 is a diagram illustrating an example of a flowchart of anomaly determination processing according to the present embodiment.
[FIG. 16]

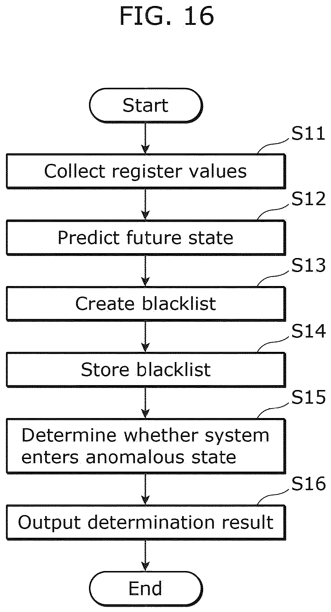

   FIG. 16 is a diagram illustrating an example of a flowchart of an anomaly detection method according to another embodiment.

### [Description of Embodiments]

### (Underlying Knowledge Forming Basis of the Present Disclosure)

A petrochemical plant, known as a critical infrastructure, includes a large-scale control system that typically includes tens to hundreds of controllers. Under the control of these controllers according to an appropriate control logic like feedback control or sequence control, the whole system operates while keeping its balance. Each of these controllers includes registers. A register refers to a region for storing, for example, a set value to be controlled or sensor information including an observation value. The controller performs control based on values (register values) stored in the registers.

Supervisory control and data acquisition (SCADA) monitors the register values connected with register numbers of these registers and determines an operating state of the control system. The registers correspond to items, such as set values and observation values of temperature and pressure. The registers include a register that, if its register value becomes fraudulent, may possibly cause a life-threatening incident. Thus, the SCADA sets a predetermined threshold value for such a register. If the register value deviates from the threshold value, an alarm is to be issued.

However, the SCADA allows only one threshold value to be set for each of the register numbers. On this account, a different threshold value cannot be set for each of the system states of the control system.

Furthermore, a cause of the alarm issue and an indicator of the degree of urgency are not standardized. For this reason, even if the SCADA issues an alarm, the intention of the alarm may not be immediately apparent. This can result in an immense amount of time spent in response and recovery. In the worst case, the control system may be shut down, causing enormous damage.

The following describes an anomaly detection system and so forth that are capable of appropriate anomaly detection.

In accordance with an aspect of the present disclosure, an anomaly detection system that detects a future anomalous state of a control system includes: a register value collector that collects register values of a plurality of register numbers from a controller that controls the control system; a future state predictor that predicts a future state of the control system; a blacklist creator that creates a blacklist based on a result of the predicting performed by the future state predictor; a blacklist manager that stores the blacklist created; an anomaly determiner that determines whether the control system enters an anomalous state, by checking the register values collected by the register value collector against the blacklist stored in the blacklist manager; and an outputter that outputs a result of the determining performed by the anomaly determiner. The blacklist creator defines, as the blacklist: a predicted register number and a range of the register value of the predicted register number; the predicted register number being a register number that is predicted, if a register value of the predicted register number is changed, to cause the control system to enter the anomalous state in future, among the register numbers holding the register values collected by the register value collector, the range being a range within which the control system is predicted to enter the anomalous state, and dynamically creates the blacklist corresponding to a combination of the register values of the plurality of register numbers collected by the register value collector.

With this, the register values held by the controller and collected by the register value collector represent the system states of the control system. Then, the blacklist is dynamically created corresponding to the combination of the register values of the plurality of register numbers collected by the register value collector. Thus, the blacklist can be dynamically created for each of the system states of the control system. More specifically, an optimum blacklist can be created corresponding to every system state (every register value) of the control system. Regardless of the current system state of the control system, anomaly determination can be performed by checking the current register values against the created blacklist. This enables appropriate anomaly detection. Such anomaly detection based on the optimum blacklist can reduce false detection or detection omission.

For example, it is possible that the blacklist creator creates the blacklist based on a result of a check of the combination of the register values of the plurality of register numbers collected by the register value collector against a combination of register values of a plurality of register numbers included in a blacklist that is previously created.

With this, if the combination of the register values of the plurality of register numbers included in the blacklist previously created is different from the current combination of the collected register values of the plurality of register numbers, the blacklist can be created. If there is no difference, this means that the blacklist corresponding to the current combination of the collected register values of the plurality of register numbers has already been created. Thus, in this case, the blacklist is not to be created. More specifically, the blacklist can be dynamically created corresponding to the combination of the register values of the plurality of register numbers that have never been collected.

For example, it is possible that the anomaly determiner determines whether the control system enters the anomalous state, by checking the register value of the predicted register number collected by the register value collector against the range of the register value of the predicted register number defined in the blacklist stored in the blacklist manager.

With this, the anomaly determination can be easily performed by checking the register value of the predicted register number.

For example, it is possible that the future state predictor predicts the future state of the control system by using a simulator that runs a simulation of the controller and the control system, and that the blacklist creator creates the blacklist based on a result of the simulation run by the simulator.

With this, the use of the simulator easily enables the prediction on the future state of the control system and, eventually, also easily enables the blacklist creation.

For example, it is possible that the anomaly detection system further includes: an anomalous state definer that defines a register number related to an anomalous state of the control system and an anomaly range of a register value of the register number, the anomaly range indicating a range of the register value within which the control system enters the anomalous state, and that the future state predictor predicts the future state of the control system in the simulation by monitoring whether, when the register value of the predicted register number is changed, the register value of the register number defined by the anomalous state definer is within the anomaly range. More specifically, it is possible that the predicted register number is highly correlated with the register number defined by the anomalous state definer to be related to the anomalous state of the control system.

With this, the register value of the register number related to the anomaly is monitored to determine whether this register value changes when the register value of the register number highly correlated with the register number related to the anomaly is changed. This can reduce the simulation cost as compared to the case where the simulation is run for each of the register numbers.

For example, it is possible that the future state predictor calculates, in the simulation, a time taken for the control system to enter the anomalous state.

With this, the blacklist includes the time taken for the control system to enter the anomalous state as a result of a deviation from the tolerance range, instead of including the IP-address pair or the protocol. This allows the importance level to be defined. For example, in the event of multiple anomalies, prioritization of responses can be determined in order to make recoveries from these anomalies.

For example, it is possible that the anomalous state definer defines the register number related to the anomalous state of the control system and the anomaly range, for each type of anomalous state of the control system.

With this, the simulations of various anomalous states can be run.

In accordance with another aspect of the present disclosure, an anomaly detection method executed by an anomaly detection system that detects a future anomalous state of a control system includes: collecting register values of a plurality of register numbers from a controller that controls the control system; predicting a future state of the control system; creating a blacklist based on a result of the predicting; storing the blacklist created; determining whether the control system enters an anomalous state, by checking the register values collected in the collecting against the blacklist stored in the storing; and outputting a result of the determining. The creating includes defining, as the blacklist: a predicted register number and a range of the register value of the predicted register number; the predicted register number being a register number that is predicted, if a register value of the predicted register number is changed, to cause the control system to enter the anomalous state in future, among the register numbers holding the register values collected in the collecting, the range being a range within which the control system is predicted to enter the anomalous state, and dynamically creating the blacklist corresponding to a combination of the register values of the plurality of register numbers collected in the collecting.

With this, the anomaly detection method capable of appropriate anomaly detection can be provided.

In accordance with still another aspect of the present disclosure, a program causes a computer to execute the above-described anomaly detection method.

With this, the program capable of appropriate anomaly detection can be provided.

The following embodiments are specific examples of the present disclosure. The numerical values, shapes, materials, elements, arrangement and connection configuration of the elements, steps, the order of the steps, etc., described in the following embodiments are merely examples, and are not intended to limit the present disclosure. Among elements in the following embodiments, those not described in any one of the independent claims indicating the broadest concept of the present disclosure are described as optional elements. Note that the respective figures are schematic diagrams and are not necessarily precise illustrations.

### (EMBODIMENT)

The following describes an embodiment of the present disclosure with reference to the drawings. Constituent elements that are essentially the same share like reference signs in the figures.

FIG. 1 is a diagram illustrating an example of a configuration of control system 1000 according to the present embodiment. In FIG. 1, control system 1000 includes control system network 102, field network 103, controller 104, SCADA 105, I/O 106, sensor 107, actuator 108, and anomaly detection system 200.

Control system 1000 is a system used in a factory or a building, for example. Control system 1000 is capable of communicating with information system network 101. Information system network 101 is a network used in an office, for example. Although not shown, information system network 101 includes an office personal computer (office PC) and a business server, such as a Web server or a mail server. The business server and the office PC are connected to Internet line 100 as needed.

Information system network 101, control system network 102, and field network 103 establish communications over Ethernet (registered trademark) standardized as IEEE 802.3, according to an appropriate protocol based on characteristics of an application, such as TCP/IP or UDP/IP.

Control system network 102 includes controller 104, SCADA 105, and anomaly detection system 200. Controller 104 and SCADA 105 included in control system network 102 can communicate with a device included in information system network 101 in terms of production efficiency for example. Field network 103 includes I/O 106, sensor 107, and actuator 108. For feedback control for instance, controller 104 performs appropriate control by receiving a sensor observation value from sensor 107 and then transmitting an optimum manipulated variable to actuator 108. I/O 106 is connected to a remote I/O device and used for communication with the remote I/O device.

Controller 104 controls control system 1000, and holds the observation value of sensor 107 and the manipulated variable (register value) of actuator 108. SCADA 105 obtains and monitors the register value held by controller 104.

As with SCADA 105, anomaly detection system 200 also obtains, for anomaly detection, the register value transmitted in the communication between controller 104 and each of sensor 107 and actuator 108. A control parameter obtained by anomaly detection system 200 may be different from that obtained by SCADA 105.

Note that control system 1000 illustrated in FIG. 1 has a typical configuration and that control system 1000 need not include all the components illustrated in FIG. 1.

FIG. 2 is a diagram illustrating an example of a configuration of anomaly detection system 200 according to the present embodiment.

Anomaly detection system 200 detects a future anomalous state of control system 1000. In FIG. 2, anomaly detection system 200 includes future state predictor 210, state determiner 220, register number correlation learner 230, register value collector 240, anomaly determiner 250, interface 260, outputter 270, blacklist creator 280, and blacklist manager 400.

Anomaly detection system 200 is a computer that includes a processor, a communication interface, and a memory. The memory includes a read only memory (Rom) and a random access memory (RAM), and is capable of storing a program executed by the processor. Each of state predictor 210, state determiner 220, register number correlation learner 230, register value collector 240, anomaly determiner 250, blacklist creator 280, and blacklist manager 400 is implemented by, for example, a processor that executes a program stored in the memory. Each of interface 260 and outputter 270 is implemented by, for example, a communication interface. Anomaly detection system 200 may be an anomaly detection device structured as a single body, for example. Alternatively, anomaly detection system 200 may include its components that are dispersedly located in a plurality of devices. For example, anomaly detection system 200 may be implemented by a server.

Blacklist manager 400 stores and manages the created blacklist. To be more specific, blacklist manager 400 includes blacklist storage 290 that stores the created blacklist. The details on a blacklist are described later.

Register value collector 240 collects register values of a plurality of register numbers from controller 104. To be more specific, register value collector 240 collects the register values of all registers held by controller 104 via interface 260. Here, a register is described with reference to FIG. 3.

FIG. 3 is a diagram illustrating an example of a register held by controller 104 according to the present embodiment.

Each of the registers is assigned a different register number. The register corresponding to the register number holds a register value. In the example illustrated in FIG. 3, register 2 holds "15.1" indicating an open-close ratio (%) of a valve, and register 10 holds "28" indicating an observed temperature (°C). Moreover, register 35 holds "27" indicating a set temperature (°C), register 67 holds "50" indicating a threshold value of the set temperature (°C), and register 100 holds "True" indicating an operating status (ON/OFF) of a heater.

SCADA 105 holds the definitions of these register numbers (that is, information about what is represented by the register value held by the register corresponding to the register number).

If these register values change, notification about the changes is transmitted from controller 104 to SCADA 105 and anomaly detection system 200. Then, SCADA 105 and anomaly detection system 200 update the register values to the register values collected.

State determiner 220 determines whether the combination of the register values of the register numbers collected by register value collector 240 has been previously observed. To be more specific, state determiner 220 makes this determination by checking the combination of the register values of the register numbers collected by register value collector 240 against a past blacklist stored in blacklist storage 290. If determining that, as a result of the check, the combination of the register values collected by register value collector 240 has not been previously observed, state determiner 220 notifies future state predictor 210 of the register values of the register numbers collected by register value collector 240.

Future state predictor 210 predicts a future state of control system 1000. To be more specific, future state predictor 210 runs a simulation based on the received register values to determine whether, when the register value of which register number changes to what value, control system 1000 will enter an anomalous state in future.

Based on the result of the prediction made by future state predictor 210 (the result of the simulation run by future state predictor 210), blacklist creator 280 creates a blacklist. Although the details are described later, blacklist creator 280 defines, as the blacklist: a predicted register number that is predicted, when a register value of the predicted register number is changed, to cause control system 1000 to enter the anomalous state, among the register numbers holding the register values collected by register value collector 240; and a range of the register value of the predicted register number, within which control system 1000 is predicted to enter the anomalous state. Thus, blacklist creator 280 dynamically creates the blacklist corresponding to the combination of the register values of the register numbers collected by register value collector 240.

Register number correlation learner 230 learns a correlation between the registers, from the register values collected by register value collector 240. Register number correlation learner 230 performs this learning at least when anomaly detection system 200 is introduced. Moreover, this learning may be performed periodically, such as once a day or once a month.

Register number correlation learner 230 obtains past register values from a historical server that stores the past register values used for creating a trend graph or for data logging for example. Then, register number correlation learner 230 learns the correlation between the registers. For example, the historical server is included in control system network 102, or may be included in SCADA 105.

For example, a correlation between the register number indicating an observation value of pressure and another register number is calculated through correlation analysis. In this case, as a result of the learning by register number correlation learner 230, a coefficient of correlation between the register number indicating the observation value of pressure and a register number indicating a set value of pressure is 1.0. Furthermore, a coefficient of coefficient between the register number indicating the observation value of pressure and a register number indicating an observation value of temperature is 0.7. Register number correlation learner 230 performs this calculation for each of the other register numbers. Note that the method of calculating a correlation coefficient is not limited to the correlation analysis, and that a different method may be used.

FIG. 4 is a diagram illustrating an example of a result of the learning by register number correlation learner 203 according to the present embodiment.

As illustrated in FIG. 4, the result of the learning can be managed in a table showing, for each of the register numbers, correlated register numbers in descending order of correlation with the register number. For example, the register numbers correlated with register 1 are register 34, register 2, and register 52 in descending order of correlation, as illustrated in FIG. 4.

Blacklist manager 400 manages the simulation result and the created blacklist by storing these into blacklist storage 290.

Anomaly determiner 250 determines whether control system 1000 enters an anomalous state, by checking the register values collected by register value collector 240 against the blacklist stored in blacklist manager 400.

Outputter 270 outputs the result of the determination made by anomaly determiner 250. For example, if anomaly determiner 250 determines that there is an anomaly, outputter 270 outputs an alert based on the result of the anomaly determination.

Although the details are described later, anomaly detection system 200 creates a highly accurate blacklist based on the states observed previously. This thereby allows a cost reduction in the calculation through the simulation.

Next, the details on future state predictor 210 are described with reference to FIG. 5.

FIG. 5 is a diagram illustrating an example of a configuration of future state predictor 210 according to the present embodiment. Future state predictor 210 operates when state determiner 220 determines that the combination of the register values collected by register value collector 240 has not been previously observed.

As illustrated in FIG. 5, future state predictor 210 includes anomalous state definer 211, correlation variable extractor 212, simulator 213, simulation value generator 214, state monitor 215, and result generator 216. Future state predictor 210 predicts a future state of control system 1000 by using simulator 213 that simulates controller 104 and control system 1000.

Anomalous state definer 211 defines an anomalous state of control system 1000. More specifically, anomalous state definer 211 defines: a register number related to an anomalous state of control system 1000; and an anomaly range of a register value of the register number (that is, a range of the register value within which control system 1000 enters the anomalous state). To be more specific, anomalous state definer 211 defines the register number related to the anomalous state of control system 1000 and the anomaly range of the register value of the register number, for each type of anomalous state of control system 1000.

FIG. 6 is a diagram illustrating an example of definitions provided by anomalous state definer 211 according to the present embodiment. As illustrated in FIG. 6, anomalous states, such as pressure rise, water level drop, temperature rise, and motor anomaly, are defined for example. For example, the register number related to the anomalous state of control system 1000 due to the pressure rise is register 10, and the anomaly range of the register value within which control system 1000 enters the anomalous state due to the pressure rise is "100 or higher". More specifically, it is defined that control system 1000 is in the anomalous state due to the pressure rise if the register value of register 10 is 100 or higher.

The definitions provided by anomalous state definer 211 are predetermined at initial setting, according to specifications of control system 1000 for example. However, the definitions of the anomalous states may be changed while control system 1000 is operational. Furthermore, a plurality of register numbers may be set corresponding to a single anomalous state. In this case, an anomaly range of the register value is set for each of the plurality of register numbers.

Correlation variable extractor 212 extracts parameters (register values) of the other register numbers held by controller 104 and having high coefficients of correlation with the register number defined by anomalous state definer 211, based on the result of the learning by register number correlation learner 230 as illustrated in FIG. 4.

Simulation value generator 214 changes the register values of the register numbers extracted by correlation variable extractor 212 into simulation values.

Simulator 213 runs a simulation of a future state of control system 1000, using the simulation values of the register numbers generated by simulation value generator 214.

While simulator 213 is performing the simulation, state monitor 215 monitors the simulation values of the register numbers defined by anomalous state definer 211 and monitors whether control system 1000 will enter an anomalous state in future.

Result generator 216 receives a result if an anomaly is detected, and collects and generates information needed for blacklist creation.

Information transmitted from state monitor 215 to result generator 216 includes a type of the anomalous state and a transition time taken to enter the anomalous state. Information transmitted from simulation value generator 214 to result generator 216 includes the register number having its register value changed into the simulation value and the changed value.

Here, a specific example of the descriptions in the blacklist is described with reference to FIG. 7.

FIG. 7 is a diagram illustrating an example of the descriptions in the blacklist stored in blacklist storage 290 according to the present embodiment. Blacklist storage 290 stores a past blacklist created by blacklist creator 280 based on the result of the simulation run by future state predictor 210. Blacklist storage 290 stores a plurality of blacklists corresponding to past combinations of the register values.

For each of the combinations of the register values collected by register value collector 240 (that is, for each of the system states of control system 1000), the blacklist includes anomaly determination criteria for the register values of the register numbers (or more specifically, includes a range predicted by future state predictor 210 within which control system 1000 enters the anomalous state). For system state 1 for instance, the anomaly determination criteria for the register numbers including register 14, register 67, and register 4 are illustrated in FIG. 7.

FIG. 8 is a diagram illustrating an example of details of the blacklist. More specifically, FIG. 8 is a diagram illustrating anomaly determination criteria for one system state in the blacklist. FIG. 8 illustrates the anomaly determination criteria of system state 1 illustrated in FIG. 7. For example, the anomaly determination criteria include a combination of: importance level; register number; anomaly range of register value of register number; anomalous state that control system 1000 is predicted to enter (predicted state); and transition time taken to enter the predicted anomalous state. In FIG. 8, importance level 1 indicates the most important register number. In the present example, register 14 is the most important register number. If the register value of register 14 is 150 or higher, the predicted future anomalous state is pressure rise. If the register value is 150, the transition time taken to enter the predicted anomalous state due to the pressure rise is 10 seconds. If the register value is 300, the transition time taken to enter the predicted anomalous state due to the pressure rise is 3 seconds.

Next, processing performed by anomaly detection system 200 is described with reference to FIG. 9.

Note that although register value collector 240 obtains the register values from controller 104 via system network 102 in the present embodiment, this is not intended to be necessary. If SCADA 105 manages all the control parameters needed for the blacklist creation, register value collector 240 may extract the register values by capturing communication between controller 104 and SCADA 105 through mirroring, for example.

FIG. 9 is a diagram illustrating an example of a flowchart of anomaly detection processing performed by anomaly detection system 200 according to the present embodiment.

Register value collector 240 monitors whether the states of the register values held by controller 104 have changed (Step S510). If the states of the register values include a state that has changed (YES in Step S510), register value collector 240 collects the register values held by controller 104 and anomaly detection system 200 performs state determination processing (Step S520). If the states of the register values include no state that has changed (NO in Step S510), register value collector 240 stands by. The state determination processing is described in detail later.

If a difference between the current state and the past state of control system 1000 is determined to be "absent" as a result of the state determination processing in Step S520 (NO in Step S530), anomaly determiner 250 performs anomaly determination processing using the blacklist held by blacklist storage 290 (Step S560).

If a difference between the current state and the past state of control system 1000 is determined to be "present" (YES in Step S530), future state predictor 210 runs a simulation (future state prediction processing) to determine whether control system 1000 will enter an anomalous state in future, using the register values (Step S540). The future state prediction processing is described in detail later.

Then, blacklist creator 280 creates a blacklist based on the result of the simulation run by future state predictor 210 (Step S550). Blacklist creation processing is described in detail later.

Anomaly determiner 250 performs the anomaly determination processing using the created blacklist (Step S560). The anomaly determination processing is described in detail later.

FIG. 10 is a diagram illustrating an example of a flowchart of the state determination processing of Step S520 according to the present embodiment. State determiner 220 performs the state determination processing of Step S520 to determine whether to create a new blacklist or to use the blacklist stored in blacklist storage 290.

State determiner 220 checks whether the combination of the register values collected by register value collector 240 has been previously observed, by checking this combination against a past combination of the register values stored in a register value storage that is not shown (Step S521). For example, the nearest neighbor algorithm can be used in the check. This algorithm can determine whether the combination of the register values collected by register value collector 240 is similar to the combination of the register values observed previously.

To be more specific, state determiner 220 searches for a cluster of the nearest-neighbor register value sets, and determines whether a gap (a difference) between the register values collected by register value collector 240 and the nearest-neighbor cluster is greater than or equal to a preset specified value (Step S522). If the gap is smaller than the preset specified value (NO in Step S522), state determiner 220 determines that there is no difference between the register values collected by register value collector 240 (or more specifically, the current state of control system 1000) and the past state (Step S523). If the gap is greater than or equal to the preset specified value (YES in Step S522), state determiner 220 determines that there is a difference between the current state and the past state of control system 1000 (Step S524).

FIG. 11 is a diagram illustrating an example of a cluster configuration of past combinations of the register values (register value sets). In FIG. 11, each of x1 and y1 represents a register value of a register number. This example includes two register numbers.

For example, assume that the current combination of the register values is register value set 1. In this case, register value set 1 is within a blacklist application range of system state 1. Thus, the gap is determined to be smaller than the specified value (Step S523), and the blacklist corresponding to system state 1 illustrated in FIG. 7 is used.

Furthermore, assume that the current combination of the register values is register value set 2. In this case, the nearest-neighbor cluster of register value set 2 corresponds to the blacklist for system state 3. However, register value set 2 is outside a blacklist application range of system state 3. From this, the gap is determined to be greater than or equal to the specified value (Step S524). Note that a blacklist application range centered around register value set 2 is to be set and used in the check of a combination of the register values to be collected by register value collector 240.

Based on the result of the check in Step S521, whether "YES" or "NO" is determined in Step S530 of FIG. 9. More specifically, whether the blacklist creation processing is to be performed in Step S550 is determined. Thus, blacklist creator 280 creates a blacklist, based on the result of the check of the combination of the register values of the register numbers collected by register value collector 240 against the combination of the register values of the register numbers included in the blacklist created previously.

FIG. 12 is a diagram illustrating an example of a flowchart of the future state prediction processing of Step S540 according to the present embodiment.

First, future state predictor 210 obtains, from anomalous state definer 211, the register number that is monitored among the register numbers defined by anomalous state definer 211 (Step S551). In the present embodiment, if the register number monitored indicates pressure rise, future state predictor 210 obtains register 10 and also obtains that the anomaly range is 100 or higher, as illustrated in FIG. 6. Furthermore, if the register number monitored indicates water level drop, future state predictor 210 obtains register 67 and also obtains that the anomaly range is 0 or lower, as illustrated in FIG. 6.

By reference to the result of the learning by register number correlation learner 230 as illustrated in FIG. 4, future state predictor 210 obtains as many register numbers that are highly correlated with the register number obtained in Step S551 (or more specifically, the register numbers having correlation coefficients greater than or equal to a specified value) as a predetermined specified number of register numbers (Step S552). Each of the obtained register numbers refers to the predicted register number that is predicted by future state predictor 210 to cause, when its register value is changed, control system 1000 to enter an anomalous state. For example, the predicted register number is highly correlated with the register number related to the anomalous state of control system 1000. If the specified number of register numbers is two, register 14 and register 4 are obtained based on the result of the learning illustrated in FIG. 4, as the two register numbers highly correlated with register 10 monitored to detect a pressure rise. Similarly, future state predictor 210 also obtains the register numbers highly correlated with register 67 monitored to detect a water level drop and the register numbers highly correlated with register 2 monitored to detect a temperature rise.

Simulator 213 runs a simulation to determine whether control system 1000 will enter an anomalous state in future if the value of the register number extracted in Step S552 is changed. If a plurality of register numbers are extracted in Step S552, simulator 213 runs a simulation for each of these register numbers. Simulator 213 runs the simulation for each of all the extracted register numbers. Simulator 213 determines whether an anomaly is caused to control system 1000 due to the change of the register value of the register number extracted in Step S552. If determining that the anomaly is caused, simulator 213 stores the result of the simulation.

A simulation environment of simulator 213 simulates a virtual environment of control system 1000. More specifically, the virtual environment includes not only controller 104, but also I/O 106, sensor 107, and actuator 108. The virtual environment can be created by digital twin virtualization technology, for example. The simulation that causes control system 1000 to operate in the virtual environment enables the prediction on a future state of control system 1000.

Simulator 213 determines a simulation value based on the register value obtained in Step S551 (Step S553), and then converts the register value of the register number extracted in Step S552 into the determined simulation value (Step S554).

Here, the register value of one register is converted into the simulation value. For the other registers, the register values obtained by register value collector 240 are used. The register values are converted for the registers included in the specified number of predicted register numbers, which are highly correlated with the register number extracted by register number correlation learner 230 and defined by anomalous state definer 211. In the present embodiment, if the specified number is two, register 14 and register 4 that are highly correlated with register 10 indicating pressure rise as in FIG. 6 are obtained by reference to FIG. 4.

After this, simulator 213 runs a simulation of a future state of control system 1000 with the lapse of time (Step S555).

Based on the simulation result, simulator 213 determines whether the anomalous state is reached (Step S556). Simulator 213 runs one simulation from the current time for a predetermined specified period, such as one hour. State monitor 215 monitors the running state by monitoring the current register value of the register number defined by anomalous state definer 211. This enables future state predictor 210 to determine whether control system 1000 enters the anomalous state. Whether control system 1000 enters the anomalous state is determined by determining whether the current register value of the register defined by anomalous state definer 211 is within the anomaly range.

In this way, future state predictor 210 predicts the future state of control system 1000 in the simulation by monitoring whether, when the register value of the predicted register number is changed, the register value of the register number defined by anomalous state definer 211 is within the anomaly range.

If control system 1000 enters the anomalous state (YES in Step S556), state monitor 215 stores the information needed for the blacklist creation as the simulation result (Step S557).

To be more specific, the information needed for the blacklist creation includes: the type of the anomalous state (such as pressure rise); the time taken to enter the anomalous state (such as 10 seconds if the simulation value is 150 or 3 seconds if the simulation value is 300); and the register number having its value changed (such as register 14). If control system 1000 enters no anomalous state (NO in Step S556), simulator 213 ends the processing.

A specific example of the simulation processing (Steps S553 to S557) is described with reference to FIG. 13. The simulation processing includes upper anomalous value calculation processing and lower anomalous value calculation processing.

FIG. 13 is a diagram illustrating an example of a flowchart of simulation value determination algorithm processing according to the present embodiment. FIG. 13 illustrates an example of the upper anomalous value calculation processing. Future state predictor 210 determines an anomaly range by the processing described below.

Simulator 213 obtains the current register value of the register number (the predicted register number) obtained in Step S552, and doubles this value (S561). Then, simulator 213 compares the doubled value with a predetermined threshold value of this predicted register number (Step S562). This threshold value is predetermined for the anomalous state related to the predicted register number. The register value of the predicted register number correlated with the register number obtained in Step S 551 is changed in order to monitor the anomalous state related to the register number obtained in Step S551. Here, if the register value of the predicted register number exceeds the threshold value, control system 1000 enters the anomalous state related to the predicted register number. This is the reason why Step S562 is performed. Note that if the threshold value is not set, the doubled value of the current register value of the predicted register number is determined to be less than the threshold value.

If the aforementioned doubled value exceeds the threshold value (YES in Step S562), simulator 213 sets the threshold value as the simulation value (Step S564). If the aforementioned doubled value is less than the threshold value (NO in Step S562), simulator 213 sets this doubled value as the simulation value (Step S563).

Simulator 213 runs the simulation using the simulation value (Step S565), and determines whether control system 1000 enters the anomalous state within a specified period (Step S566). The specified period refers to a period during which the simulation is run, and is determined appropriately according to, for example, performance capabilities of simulator 213. For example, if control system 1000 enters the anomalous state within the specified period, future state predictor 210 (simulator 213) calculates, in the simulation, a time taken for control system 1000 to enter the anomalous state.

If control system 1000 enters no anomalous state within the specified period (NO in Step S566), simulator 213 determines whether the number of simulations has reached a predetermined specified count (Step S567). If the specified count has not been reached (NO in Step S567), simulator 213 doubles the simulation value again (Step S561) and performs the processing again. If the specified count is reached (YES in Step S567), simulator 213 ends the processing. Note that if the threshold value is set as the simulation value in Step S564, the simulation value cannot be increased anymore and thus the processing may be ended even if the number of simulations has not reached the specified count.

If determining that control system 1000 enters the anomalous state (YES in Step S566), simulator 213 calculates a median value between the last simulation value (normal value: the last doubled value or the current register value of the predicted register number if there is no last doubled value) and the current simulation value (anomalous value: the current doubled value) (S568). Simulator 213 runs a simulation using this median value as the simulation value (Step S569). Then, simulator 213 determines whether control system 1000 enters the anomalous state within the specified period (Step S570).

If determining that control system 1000 enters the anomalous state (YES in Step S570), simulator 213 stores anomalous-value information as a result (Step S572). The information stored includes the target predicted register number, the register value (simulation value), the anomalous state of control system 1000, and the transition time taken to enter this state. To be more specific, the anomalous-value information includes: pressure rise as the type of the anomalous state; 10 seconds as the time taken to enter the anomalous state if the simulation value is 150; and register 14 as the register number having its value changed into the simulation value. Furthermore, simulator 213 defines the current simulation value (median value) as the anomalous value (Step S573), and determines whether the number of simulations has reached the specified count (Step S574). If the number of simulations has not reached the specified count (NO in Step S574), simulator 213 calculates the median value between the last normal value and the current anomalous value again (Step S568). Then, simulator 213 runs a simulation (S569).

If determining that control system 1000 enters no anomalous state (NO in Step S570), simulator 213 defines the current simulation value as the normal value (Step S571). Then, simulator 213 determines whether the number of simulations has reached the specified count (Step S574). If the number of simulations has not reached the specified count (NO in Step S574), simulator 213 calculates the median value between the current normal value and the last anomalous value again (Step S568). Then, simulator 213 runs a simulation (S569).

If the number of simulations has reached the specified count (YES in Step S574), the processing is ended.

Note that as the number of loops in this processing increases, or more specifically, as the specified count increases, a more detailed boundary value (that is, a predicted range of the register value within which control system 1000 enters the anomalous state) can be obtained. However, the increased number of simulations requires more processing time.

Here, in Step S561 of the lower anomalous value calculation processing, the value is reduced to half instead of being doubled in Step S561 of the upper anomalous value calculation processing. Thus, description is omitted here. Note that the step of doubling or reducing to half is merely an example and can be set as appropriate.

FIG. 14 is a diagram illustrating an example of a flowchart of the blacklist creation processing in Step S550 according to the present embodiment.

Blacklist creator 280 obtains the simulation result from future state predictor 210 (Step S581), and summarizes the simulation result (Step S582).

This summarizing includes: summarizing the simulation result of the register numbers having their register values changed into the simulation values; and defining the range of the anomalous state. For example, assume that the simulation of the upper anomalous value calculation processing is performed for register number A and that an anomalous state is determined to be present as a result. Assume also that the results showing the register value (simulation value), the type of the anomalous state, and the transition time taken to enter the anomalous state are: "150, pressure anomaly, 100 minutes"; "300, pressure anomaly, 50 minutes"; and "400, pressure anomaly, 10 minutes". In this case, the blacklist for the pressure anomaly of register number A includes an item "register value: transition time" showing "150:100, 300: 50, 400: 10". Furthermore, the definitions are similarly provided through the lower anomalous value calculation as with the upper anomalous value calculation.

Blacklist creator 280 assigns an importance level to each of the register values (Step S583). For example, blacklist creator 280 calculates the importance level, based on the level of impact caused if control system 1000 enters the anomalous state and the transition time taken to enter this anomalous state.

More specifically, for the anomalous value calculated by the upper anomalous value calculation processing, the importance level increases with decrease in the transition time caused by the minimum anomalous value. In contrast, for the anomalous value calculated by the lower anomalous value calculation processing, the importance level increases with decrease in the transition time caused by the maximum anomalous value.

As a policy for determining the importance level, emphasis may be placed on the impact to be caused if control system 1000 enters the anomalous state, for example. Here, assume that the blacklist includes three factors, for example. One of the factors is the anomaly caused by the pressure rise in 50 minutes (anomaly A). Another one of the factors is the anomaly caused by the pressure rise in 45 minutes (anomaly B). The last one of the factors is the anomaly caused by the temperature anomaly in 45 minutes (anomaly C). If the anomaly caused by the pressure rise has a significantly greater impact than the temperature anomaly, anomaly B, anomaly A, and anomaly C are listed in this descending order of importance level. The perspective on an impact caused by an anomaly or on a transition time is different depending on a policy of an organization. Thus, if a difference in the transition time by five minutes is regarded as a great difference, anomaly B, anomaly C, and anomaly A may be listed in this descending order of importance level. If both the upper anomalous value and the lower anomalous value are present, the shorter one of the transition times corresponding to these upper and lower anomalous values may be adopted.

The use of importance level limits the number of registers listed in the blacklist. This enables the creation of a blacklist that includes the register numbers extracted in descending order of importance level. Furthermore, in the event of multiple simultaneous alerts, the use of importance level also allows prioritization of responses to these alerts.

Then, blacklist creator 280 stores the result of the summarizing as the blacklist into blacklist storage 290 (Step S584).

In this way, blacklist creator 280 creates the blacklist based on the result of the simulation run by simulator 213.

FIG. 15 is a diagram illustrating an example of a flowchart of the anomaly determination processing in Step S560 performed by anomaly determiner 250 according to the present embodiment.

Anomaly determiner 250 obtains the blacklist corresponding to the current combination of the register values from blacklist storage 290 (Step S591). Then, anomaly determiner 250 extracts the register number (predicted register number) included in the blacklist (Step S592).

Then, anomaly determiner 250 obtains the current register value of the extracted register number included in the blacklist, from register value collector 240 (Step S593).

Anomaly determiner 250 checks the obtained register value against a tolerable range of the corresponding register number included in the blacklist (Step S594), and determines whether the obtained register value is within the tolerable range (Step S595). If the obtained register value is within the tolerable range (YES in Step S595), anomaly determiner 250 ends the processing. If the obtained register value is not within the tolerable range (NO in Step S595), anomaly determiner 250 transmits the result of the determination to outputter 270, which thus issues an alert (Step S596). Note that if the obtained register value is within the tolerable range, outputter 270 may output information indicating that control system 1000 is unlikely to enter an anomalous state, for example.

Take as an example the blacklist illustrated in FIG. 8 and the register values collected by register value collector 240 as in FIG. 3. In this case, the register value of register 2 is "15.0" and the anomaly range in the blacklist is "10.0 or lower", and thus this is determined to be normal. However, the register value of register 67 is "50" and the anomaly range in the blacklist is "100 or lower", and thus this is determined to be anomalous. Based on this determination result, notification that control system 1000 is likely to enter an anomalous state in future is provided (or more specifically, an alert is issued). The determination result includes blacklist information, such as "importance level: 2", "register number: register 67", "anomaly range: 100 or lower", "predicted state: liquid level drop", and "transition time: [30: 30 sec., 100: 50 sec.]". This information is transmitted as details of the alert. The importance level included in the alert can be used in triage performed for multiple simultaneous alerts or for an alert currently being issued.

In this way, anomaly determiner 250 determines whether control system 1000 enters an anomalous state, by checking the register value of the predicted register number collected by register value collector 240 against the range of the register value of the predicted register number defined in the blacklist stored in blacklist manager 400.

With this, the register values held by controller 104 and collected by register value collector 240 represent the system states of control system 1000. Then, the blacklist is dynamically created corresponding to the combination of the register values of the plurality of register numbers collected by register value collector 240. Thus, the blacklist can be dynamically created for each of the system states of control system 1000. More specifically, an optimum blacklist can be created corresponding to every system state (every register value) of control system 1000. Regardless of the current system state of control system 1000, anomaly determination can be performed by checking the current register values against the created blacklist. This enables appropriate anomaly detection. Such anomaly detection based on the optimum blacklist can reduce false detection or detection omission.

### (OTHER EMBODIMENTS)

Although an anomaly detection system according to one or more aspects of the present disclosure has been described based on the embodiment, the present disclosure is not limited to this embodiment. Those skilled in the art will readily appreciate that embodiments arrived at by making various modifications to the above embodiment or embodiments arrived at by selectively combining elements disclosed in the above embodiment without materially departing from the scope of the present disclosure may be included within one or more aspects of the present disclosure.

For example, the above embodiment describes blacklist creator 280 that creates the blacklist based on the result of the simulation run by simulator 213 as an example. However, the result of the simulation run by simulator 213 is not necessarily used. For example, a future state of control system 1000 may be predicted through learning of various combinations of register values previously collected.

For example, the above embodiment describes anomalous state definer 211 that defines, for each type of anomalous state of control system 1000, a register number related to an anomalous state of control system 1000 and an anomaly range. However, this is not intended to be limiting. For example, anomalous state definer 211 may define a register number and an anomaly range for a single anomalous state. In this case, anomalous state definer 211 need not define a register number and an anomaly state for each type of anomalous state of control system 1000.

Note that the present disclosure can be implemented not only as anomaly detection system 200 but also as an anomaly detection method including steps (processes) performed by the components included in anomaly detection system 200.

FIG. 16 is a diagram illustrating an example of a flowchart of an anomaly detection method according to another embodiment.

An anomaly detection method is executed by an anomaly detection system that detects a future anomalous state of a control system. As shown in FIG. 16, the anomaly detection method includes: collecting register values of a plurality of register numbers from a controller that controls the control system (Step S11); predicting a future state of the control system (Step S12); creating a blacklist based on a result of the predicting (Step S13); storing the blacklist created (Step S14); determining whether the control system enters an anomalous state, by checking the register values collected in the collecting against the blacklist stored in the storing (Step S15); and outputting a result of the determining (Step S16). The creating includes defining, as the blacklist: a predicted register number that is predicted, if a register value of the predicted register number is changed, to cause the control system to enter the anomalous state in future, among the register numbers holding the register values collected in the collecting; and a range of the register value of the predicted register number, the range being a range within which the control system is predicted to enter the anomalous state, and dynamically creating the blacklist corresponding to a combination of the register values of the plurality of register numbers collected in the collecting.

For example, the steps in the anomaly detection method may be executed by a computer (computer system). Then, the present disclosure may be implemented to a program for causing the computer to execute the steps in the anomaly detection method.

Furthermore, the present disclosure may be implemented to a non-transitory computer-readable recording medium, such as a Compact Disc-Read Only Memory (CD-ROM), having recorded thereon the program.

For example, when the present disclosure is implemented to a program software, each step is executed by the program executed with hardware resources such as a CPU, a memory, and an input/output circuit, of the computer. In other words, each step is executed when the CPU obtains data from the memory or the input/output circuit, or the like and performs calculation on the data, or outputs the calculation result to the memory, the input/output circuit, or the like.

Each constituent element included in anomaly detection system 200 according to the above-described embodiments may be implemented to a specialized circuit or a general-purpose circuit.

Each constituent element included in anomaly detection system 200 according to the above-described embodiments may be implemented to a Large Scale Integration (LSI) which is an Integrated Circuit (IC).

Moreover, the circuit integration is not limited to LSI, and may be realized by a dedicated circuit or a general-purpose processor. A field programmable gate array (FPGA) or a reconfigurable processor which is reconfigurable in connection or settings of circuit cells inside the LSI circuit may be used.

Further, when development of a semiconductor technology or another derived technology provides a circuit integration technology which replaces LSI, as a matter of course, each constituent element included in anomaly detection system 200 may be integrated by using this technology.

In addition, the present disclosure may include embodiments obtained by making various modifications on the above embodiments which those skilled in the art will arrive at, or embodiments obtained by selectively combining the elements and functions disclosed in the above embodiments, without materially departing from the scope of the present disclosure.

### [Industrial Applicability]

The present disclosure is useful for anomaly detection performed by a control system.

### [Reference Signs List]

- 100: Internet line
- 101: information system network
- 102: control system network
- 103: field network
- 104: controller
- 105: SCADA
- 106: I/O
- 107: sensor
- 108: actuator
- 200: anomaly detection system
- 210: future state predictor
- 211: anomalous state definer
- 212: correlation variable extractor
- 213: simulator
- 214: simulation value generator
- 215: state monitor
- 216: result generator
- 220: state determiner
- 230: register number correlation learner
- 240: register value collector
- 250: anomaly determiner
- 260: interface
- 270: outputter
- 280: blacklist creator
- 290: blacklist storage
- 400: blacklist manager
- 1000: control system

## Claims

1. An anomaly detection system that detects a future anomalous state of a control system (1000), the anomaly detection system comprising:
a register value collector (240) that collects register values of a plurality of register numbers from a controller (104) that controls the control system (1000);
a future state predictor (210) that predicts a future state of the control system (1000); and
an outputter (270);
**characterized by**
a blacklist creator (280) that creates a blacklist based on a result of the predicting performed by the future state predictor (210);
a blacklist manager (400) that stores the blacklist created; and
an anomaly determiner (250) that determines whether the control system (1000) enters an anomalous state, by checking the register values collected by the register value collector (240) against the blacklist stored in the blacklist manager (400); and in that
the outputter (270) outputs a result of the determining performed by the anomaly determiner (250), and
the blacklist creator (280)
defines, as the blacklist: a predicted register number and a range of the register value of the predicted register number; the predicted register number being a register number that is predicted, if a register value of the predicted register number is changed, to cause the control system (1000) to enter the anomalous state in future, among the register numbers holding the register values collected by the register value collector (240), the range being a range within which the control system (1000) is predicted to enter the anomalous state, and
dynamically creates the blacklist corresponding to a combination of the register values of the plurality of register numbers collected by the register value collector (240).

2. The anomaly detection system according to claim 1, wherein the blacklist creator (280) creates the blacklist based on a result of a check of the combination of the register values of the plurality of register numbers collected by the register value collector (240) against a combination of register values of a plurality of register numbers included in a blacklist that is previously created.

3. The anomaly detection system according to claim 1, wherein the anomaly determiner (250) determines whether the control system (1000) enters the anomalous state, by checking the register value of the predicted register number collected by the register value collector (280) against the range of the register value of the predicted register number defined in the blacklist stored in the blacklist manager(400).

4. The anomaly detection system according to any one of claim 1 to claim 3,
wherein the future state predictor (210) predicts the future state of the control system (1000) by using a simulator (213) that runs a simulation of the controller (104) and the control system (1000), and
the blacklist creator (280) creates the blacklist based on a result of the simulation run by the simulator (213).

5. The anomaly detection system according to claim 4, further comprising:
an anomalous state definer (211) that defines a register number related to an anomalous state of the control system (1000) and an anomaly range of a register value of the register number, the anomaly range indicating a range of the register value within which the control system (1000) enters the anomalous state,
wherein the future state predictor (210) predicts the future state of the control system (1000) in the simulation by monitoring whether, when the register value of the predicted register number is changed, the register value of the register number defined by the anomalous state definer (211) is within the anomaly range.

6. The anomaly detection system according to claim 5, wherein the predicted register number is highly correlated with the register number defined by the anomalous state definer (211) to be related to the anomalous state of the control system (1000).

7. The anomaly detection system according to claim 4, wherein the future state predictor (210) calculates, in the simulation, a time taken for the control system (1000) to enter the anomalous state.

8. The anomaly detection system according to claim 5, wherein the anomalous state definer (211) defines the register number related to the anomalous state of the control system (1000) and the anomaly range, for each type of anomalous state of the control system (1000).

9. An anomaly detection method executed by an anomaly detection system (200) that detects a future anomalous state of a control system (1000), the anomaly detection method comprising:
collecting (S11) register values of a plurality of register numbers from a controller (104) that controls the control system (1000);
predicting (S12) a future state of the control system (1000);
creating (S13) a blacklist based on a result of the predicting (S12);
storing (S14) the blacklist created;
determining (S15) whether the control system (1000) enters an anomalous state, by checking the register values collected in the collecting (S11) against the blacklist stored in the storing (S14); and
outputting (S16) a result of the determining (S15),
wherein the creating (S13) includes
defining, as the blacklist: a predicted register number and a range of the register value of the predicted register number; the predicted register number being a register number that is predicted, if a register value of the predicted register number is changed, to cause the control system (1000) to enter the anomalous state in future, among the register numbers holding the register values collected in the collecting (S11), the range being a range within which the control system (1000) is predicted to enter the anomalous state, and
dynamically creating the blacklist corresponding to a combination of the register values of the plurality of register numbers collected in the collecting (S11).

10. A program for causing a computer to execute the anomaly detection method according to claim 9.

## Patentansprüche

1. System für Erfassung von Anomalie, die einen künftigen anomalen Zustand eines Steuerungssystems (1000) erfasst, wobei das System für Erfassung von Anomalie umfasst:
eine Einrichtung (240) zum Sammeln von Registerwerten, die Registerwerte einer Vielzahl von Registernummern von einer Steuerungseinrichtung (104) sammelt, die das Steuerungssystem (1000) steuert;
eine Einrichtung (210) zum Vorhersagen eines künftigen Zustandes, die einen künftigen Zustand des Steuerungssystems (1000) vorhersagt; sowie
eine Ausgabeeinrichtung (270);
**gekennzeichnet durch**
eine Einrichtung (280) zum Erstellen einer Sperrliste, die eine Sperrliste auf Basis eines Ergebnisses der **durch** die Einrichtung (210) zum Vorhersagen eines künftigen Zustandes durchgeführten Vorhersage erstellt;
eine Einrichtung (400) zum Verwalten der Sperrliste, die die erstellte Sperrliste speichert; sowie
eine Einrichtung (250) zum Feststellen von Anomalie, die feststellt, ob das Steuerungssystem (1000) in einen anomalen Zustand eintritt, indem sie die **durch** die Einrichtung (240) zum Sammeln von Registerwerten gesammelten Registerwerte mit der in der Einrichtung (400) zum Verwalten der Sperrliste gespeicherten Sperrliste vergleicht; und **dadurch, dass**
die Ausgabeeinrichtung (270) ein Ergebnis der **durch** die Einrichtung (250) zum Feststellen von Anomalie durchgeführten Feststellung ausgibt; und
die Einrichtung (280) zum Erstellen einer Sperrliste als die Sperrliste definiert:
eine vorhergesagte Registernummer sowie einen Bereich des Registerwertes der vorhergesagten Registernummer; wobei von den Registernummern, die die von der Einrichtung (240) zum Sammeln von Registerwerten gesammelten Registerwerte haben, die vorhergesagte Registernummer eine Registernummer ist, die vorhergesagt wird, wenn ein Registerwert der vorhergesagten Registernummer geändert wird, um das Steuerungssystem (1000) zu veranlassen, künftig in den anomalen Zustand einzutreten, wobei der Bereich ein Bereich ist, innerhalb dessen Eintritt des Steuerungssystems (1000) in den anomalen Zustand vorhergesagt wird, und
dynamisch die Sperrliste erstellt, die einer Kombination der **durch** die Einrichtung (240) zum Sammeln von Registerwerten gesammelten Registerwerte der Vielzahl von Registernummern entspricht.

2. System für Erfassung von Anomalie nach Anspruch 1, wobei die Einrichtung (280) zum Erstellen einer Sperrliste die Sperrliste auf Basis eines Ergebnisses eines Vergleichs der Kombination der durch die Einrichtung (240) zum Sammeln von Registerwerten gesammelten Registerwerte der Vielzahl von Registernummern mit einer Kombination von Registerwerten einer Vielzahl von Registernummern erstellt, die in einer zuvor erstellten Sperrliste enthalten sind.

3. System für Erfassung von Anomalie nach Anspruch 1, wobei die Einrichtung (250) zum Feststellen von Anomalie feststellt, ob das Steuerungssystem (1000) in den anomalen Zustand eintritt, indem sie den durch die Einrichtung (280) zum Sammeln von Registerwerten gesammelten Registerwert der vorhergesagten Registernummer mit dem Bereich des Registerwertes der vorhergesagten Registernummer vergleicht, der in der in der Einrichtung (400) zum Verwalten der Sperrliste gespeicherten Sperrliste definiert ist.

4. System für Erfassung von Anomalie nach einem der Ansprüche 1 bis 3,
wobei die Einrichtung (210) zum Vorhersagen eines künftigen Zustandes den künftigen Zustand des Steuerungssystems (1000) unter Einsatz einer Simulationseinrichtung (213) vorhersagt, die eine Simulation der Steuerungseinrichtung (104) sowie des Steuerungssystems (1000) durchführt, und
die Einrichtung (280) zum Erstellen einer Sperrliste die Sperrliste auf Basis eines Ergebnisses der durch die Simulationseinrichtung (213) durchgeführten Simulation erstellt.

5. System für Erfassung von Anomalie nach Anspruch 4, das des Weiteren umfasst:
eine Einrichtung (211) zum Definieren eines anomalen Zustandes, die eine sich auf einen anomalen Zustand des Steuerungssystems (1000) beziehende Registernummer sowie einen Anomalie-Bereich eines Registerwertes der Registernummer definiert, wobei der Anomalie-Bereich einen Bereich des Registerwertes anzeigt, innerhalb dessen das Steuerungssystem (1000) in den anomalen Zustand eintritt,
wobei die Einrichtung (210) zum Vorhersagen eines künftigen Zustandes den künftigen Zustand des Steuerungssystems (1000) in der Simulation vorhersagt, indem sie überwacht, ob, wenn der Registerwert der vorhergesagten Registernummer geändert wird, der Registerwert der durch die Einrichtung (211) zum Definieren eines anomalen Zustandes definierten Registernummer innerhalb des Anomalie-Bereiches liegt.

6. System für Erfassung von Anomalie nach Anspruch 5, wobei die vorhergesagte Registernummer in enger Korrelation mit der durch die Einrichtung (211) zum Definieren eines anomalen Zustandes definierten, sich auf den anomalen Zustand des Steuerungssystems (1000) beziehenden, Registernummer ist.

7. System für Erfassung von Anomalie nach Anspruch 4, wobei die Einrichtung (210) zum Vorhersagen eines künftigen Zustandes in der Simulation eine Zeit berechnet, die das Steuerungssystem (1000) benötigt, um in den anomalen Zustand einzutreten.

8. System für Erfassung von Anomalie nach Anspruch 5, wobei die Einrichtung (211) zum Definieren eines anomalen Zustandes die sich auf den anomalen Zustand des Steuerungssystems (1000) beziehende Registernummer sowie den Anomalie-Bereich für jeden Typ von anomalem Zustand des Steuerungssystems (1000) definiert.

9. Verfahren für Erfassung von Anomalie, das von einem System (200) für Erfassung von Anomalie ausgeführt wird, das einen künftigen anomalen Zustand eines Steuerungssystems (1000) erfasst, wobei das Verfahren für Erfassung von Anomalie umfasst:
Sammeln (S11) von Registerwerten einer Vielzahl von Registernummern von einer Steuerungseinrichtung (104), die das Steuerungssystem (1000) steuert;
Vorhersagen (S12) eines künftigen Zustandes des Steuerungssystems (1000);
Erstellen (S13) einer Sperrliste auf Basis eines Ergebnisses des Vorhersagens (S12);
Speichern (S14) der erstellten Sperrliste;
Feststellen (S15), ob das Steuerungssystem (1000) in einen anomalen Zustand eintritt, durch Vergleichen der bei dem Sammeln (S11) gesammelten Registerwerte mit der bei dem Speichern (S14) gespeicherten Sperrliste; und,
Ausgeben (S16) eines Ergebnisses des Feststellens (S15),
wobei das Erstellen (S13) einschließt:
Definieren einer vorhergesagten Registernummer sowie eines Bereiches des Registerwertes der vorhergesagten Registernummer als die Sperrliste; wobei von den Registernummern, die die bei dem Sammeln (S11) von Registerwerten gesammelten Registerwerte haben, die vorhergesagte Registernummer eine Registernummer ist, die vorhergesagt wird, wenn ein Registerwert der vorhergesagten Registernummer geändert wird, um das Steuerungssystem (1000) zu veranlassen, künftig in den anomalen Zustand einzutreten, wobei der Bereich ein Bereich ist, innerhalb dessen Eintritt des Steuerungssystems (1000) in den anomalen Zustand vorhergesagt wird, und
dynamisches Erstellen der Sperrliste, die einer Kombination der bei dem Sammeln (S11) gesammelten Registerwerte der Vielzahl von Registernummern entspricht.

10. Programm, das einen Computer veranlasst, das Verfahren für Erfassung von Anomalie nach Anspruch 9 auszuführen.

## Revendications

1. Système de détection d'anomalie détectant un futur état anormal d'un système de contrôle (1000), le système de détection d'anomalie comprenant :
un collecteur de valeurs de registre (240) qui collecte les valeurs de registre d'une pluralité de numéros de registre provenant d'un contrôleur (104) qui contrôle le système de contrôle (1000) ;
un prédicteur d'état futur (210) qui prédit un état futur du système de contrôle (1000) ; et
un émetteur (270) ;
**caractérisé**
**par** un créateur de liste noire (280) qui crée une liste noire sur la base d'un résultat de la prédiction effectuée par le prédicteur d'état futur (210) ;
par un gestionnaire de liste noire (400) qui stocke la liste noire créée ; et
par un déterminateur d'anomalie (250) qui détermine si le système de contrôle (1000) entre ou non dans un état anormal en comparant les valeurs de registre collectées par le collecteur de valeurs de registre (240) à la liste noire stockée dans le gestionnaire de liste noire (400) ; et
en ce que l'émetteur (270) émet un résultat de la détermination effectuée par le détecteur d'anomalie (250), et
le créateur de liste noire (280)
définit, comme liste noire : un numéro de registre prédit et une plage de valeurs de registre pour le numéro de registre prédit ; le numéro de registre prédit étant un numéro de registre dont il est prédit que, si la valeur de registre du numéro de registre prédit est changée, il provoquera dans le futur l'entrée du système de contrôle (1000) dans l'état anormal, parmi les numéros de registre contenant les valeurs de registre collectées par le collecteur de valeurs de registre (240), la plage étant une plage dans laquelle il est prédit que le système de contrôle (1000) entrera dans l'état anormal, et
crée dynamiquement la liste noire correspondant à une combinaison des valeurs de registre de la pluralité de numéros de registre collectées par le collecteur de valeurs de registre (240).

2. Système de détection d'anomalie selon la revendication 1, dans lequel le créateur de liste noire (280) crée la liste noire sur la base du résultat d'une comparaison de la combinaison des valeurs de registre de la pluralité de numéros de registre collectées par le collecteur de valeurs de registre (240) à une combinaison de valeurs de registre d'une pluralité de numéros de registre inclus dans une liste noire créée préalablement.

3. Système de détection d'anomalie selon la revendication 1, dans lequel le déterminateur d'anomalie (250) détermine si le système de contrôle (1000) entre ou non dans l'état anormal en comparant la valeur de registre du numéro de registre prédit collectée par le collecteur de valeurs de registre (280) à la plage de la valeur de registre du numéro de registre prédit définie dans la liste noire stockée dans le gestionnaire de liste noire (400).

4. Système de détection d'anomalie selon l'une quelconque des revendications 1 à 3, dans lequel
le prédicteur d'état futur (210) prédit l'état futur du système de contrôle (1000) en utilisant un simulateur (213) qui exécute une simulation du contrôleur (104) et du système de contrôle (1000), et
le créateur de liste noire (280) crée la liste noire sur la base d'un résultat de la simulation exécutée par le simulateur (213).

5. Système de détection d'anomalie selon la revendication 4, comprenant en outre :
un définisseur d'état anormal (211) qui définit un numéro de registre relatif à un état anormal du système de contrôle (1000) et une plage d'anomalie d'une valeur de registre du numéro de registre, la plage d'anomalie indiquant une plage de la valeur de registre dans laquelle le système de contrôle (1000) entre dans l'état anormal,
dans lequel le prédicteur d'état futur (210) prédit l'état futur du système de contrôle (1000) dans la simulation en vérifiant si, quand la valeur de registre du numéro de registre prédit est changée, la valeur de registre du numéro de registre défini par le définisseur d'état anormal (211) se trouve ou non dans la plage d'anomalie.

6. Système de détection d'anomalie selon la revendication 5, dans lequel le numéro de registre prédit est fortement corrélé avec le numéro de registre défini par le définisseur d'état anormal (211) comme étant relatif à l'état anormal du système de contrôle (1000).

7. Système de détection d'anomalie selon la revendication 4, dans lequel le prédicteur d'état futur (210) calcule, dans la simulation, le temps nécessaire au système de contrôle (1000) pour entrer dans l'état anormal.

8. Système de détection d'anomalie selon la revendication 5, dans lequel le définisseur d'état anormal (211) définit le numéro de registre relatif à l'état anormal du système de contrôle (1000) et la plage d'anomalie pour chaque type d'état anormal du système de contrôle (1000).

9. Procédé de détection d'anomalie exécuté par un système de détection d'anomalie (200) qui détecte un état anormal futur d'un système de contrôle (1000), le procédé de détection d'anomalie comprenant :
la collecte (S11) des valeurs de registre d'une pluralité de numéros de registre provenant d'un contrôleur (104) qui contrôle le système de contrôle (1000) ;
la prédiction (S12) d'un état futur du système de contrôle (1000) ;
la création (S13) d'une liste noire sur la base d'un résultat de la prédiction (S12) ;
le stockage (S14) de la liste noire créée ;
la détermination (S15) du fait que le système de contrôle (1000) entre ou non dans un état anormal en comparant les valeurs de registre collectées lors de la collecte (S11) à la liste noire stockée dans le stockage (S14) ; et
l'envoi (S16) d'un résultat de la détermination (S15),
dans lequel la création (S13) inclut
la définition, comme liste noire : d'un numéro de registre prédit et d'une plage de valeurs de registre du numéro de registre prédit ; le numéro de registre prédit étant un numéro de registre dont il est prédit que si la valeur de registre du numéro de registre prédit est changée, il provoquera dans le futur l'entrée du système de contrôle (1000) dans l'état anormal, parmi les numéros de registre contenant les valeurs de registre collectées lors de la collecte (S11), la plage étant une plage dans laquelle il est prédit que le système de contrôle (1000) entrera dans l'état anormal, et
la création dynamique de la liste noire correspondant à une combinaison des valeurs de registre de la pluralité de numéros de registre collectés lors de la collecte (S11).

10. Programme destiné à commander à un ordinateur d'exécuter le procédé de détection d'anomalie selon la revendication 9.
